# EUROPÄISCHE PATENTSCHRIFT

(11) **EP 0 457 717 B1**
(45) Veröffentlichungstag und Bekanntmachung des Hinweises auf die Patenterteilung: **25.10.1995**
(21) Anmeldenummer: 91810282.3
(22) Anmeldetag: 16.04.1991
(51) Int. Cl.: B01D 9/00

(54) **Verfahren zur gerichteten fraktionierten Kristallisation**
Process for fractional crystallization
Procédé pour la cristallisation fractionnée

(30) Priorität: 16.05.1990 CH 1631/90
(43) Veröffentlichungstag der Anmeldung: 21.11.1991
(73) Patentinhaber: Sulzer Chemtech AG, CH-8404 Winterthur (CH)
(72) Erfinder: Slobodan, Jancic, Dr., CH-6900 Lugano (CH)
(74) Vertreter: Hammer, Bruno Dr.

(56) Entgegenhaltungen:
- DE-A- 2 625 296
- GB-A- 988 207
- US-A- 4 162 617

## Beschreibung

Die Erfindung betrifft ein Verfahren zur Stofftrennung mittels gerichteter fraktionierter Kristallisation mit einer auf Kühlflächen aufwachsenden, eine zusammenhängende Schickt bildenden Kristallphase und einer diese umgebende Flüssigphase.

Das Verfahren der fraktionierten Kristallisation ist z.B. beschrieben in SULZER Technische Rundschau 4/1985. Bei der gerichteten fraktionierten Kristallisation ist die Zone konstitutioneller Unterkühlung an der Phasengrenze von entscheidender Bedeutung auf das Kristallwachstum und speziell die Reinheit der kristallinen Phase. Vor allem ein Auftreten des raschen dendritischen Wachstums in dieser Zone führt zu relativ grossen Anteilen an Verunreinigungen, welche in die Kristallphase eingebaut bzw. eingeschlossen werden. Zur Reduktion dieser Verunreinigungen in der kristallinen Phase wurde schon versucht, die flüssige Phase bzw. Schmelze gleichförmig zu bewegen oder durch aufsteigende Gasblasen eine Turbulenz zu erzeugen. Diese bisherigen Verbesserungsversuche sind jedoch technisch aufwendig, teuer und nicht immer sehr wirkungsvoll.

Es ist Aufgabe der Erfindung, diese Probleme zu überwinden und ein Verfahren zu schaffen, welche eine erhöhte Trennwirkung der Kristallisation und/oder einen rascheren Prozessablauf mit erhöhter Produktivität ergeben bzw. welche die gleiche Trennleistung mit kleineren Anlagen und mit reduzierten Investitions- und Betriebskosten erreichen lassen, so dass reinere Kristalle in kürzerer Zeit, in kleineren Anlagen gewonnen werden können.

Diese Aufgabe wird gelöst durch das Verfahren nach Anspruch 1. Dabei wird durch die oszillierende Bewegung der Flüssigphase vor allem im Bereich der Phasentrennung an den Kristallisationsflächen eine wesentliche Verbesserung der Temperatur- und Konzentrationsverteilungen und dadurch eine entsprechend stark erhöhte Trennwirkung des Kristallisationprozesses erreicht. Vorteilhafte Weiterbildungen der Erfindung gemäss abhängigen Ansprüchen können zusätzlich zur oszillierenden Bewegung eine überlagerte gleichförmige Umwälzbewegung aufweisen. Durch deren kombinierte Wirkung kann dabei, abgestimmt auf die Kristallisationsanlage und die zu trennenden Stoffe, eine weitere Verbesserung des Kristallisationsvorgangs erreicht werden. Vorzugsweise kann dabei die Umwälzbewegungsrichtung im Bereich der Phasengrenze eine Komponente aufweisen, die senkrecht zur Oszillationsrichtung verläuft, und es können die mittleren Geschwindigkeiten der oszillierenden Bewegung und der gleichförmigen Bewegung in der gleichen Grössenordnung liegen. Um optimierte Temperatur- und Konzentrationsverteilungsverhältnisse an den Kristallisationszonen zu schaffen und dadurch besonders günstige Resultate zu erreichen, können die Amplituden der oszillierenden Bewegung in der gleichen Grössenordnung liegen wie die Grenzschichtdicke der konstitutionellen Unterkühlungszone. Und es können weiter die Frequenz der oszillierenden Bewegung zwischen 50 und 400 Min.⁻¹ und deren mittlere Amplituden zwischen 50 und 500 µ liegen.

Eine Vorrichtung zur Ausführung dieses Verfahrens weist einen zugeordneten hydraulischen Oszillator auf. Bei vorteilhaften Weiterbildungen der Vorrichtung kann gemäss abhängigen Ansprüchen der hydraulische Oszillator mit zugehörigem Antrieb ausserhalb des Kristallisationsbehälters liegen und mit diesem über ein Verbindungsstück verbunden sein, wobei Oszillator und Verbindungsstück im wesentlichen auf der Temperatur der Flüssigphase gehalten werden. Dies ergibt eine einfach zu betreibende und zu wartende Einrichtung. Der hydraulische Oszillator kann aber auch im Kristallisationsbehälter selber angeordnet und damit auch auf der optimalen Temperatur gehalten sein. Durch einen Oszillator mit asymmetrischen Pulsformen, z.B. mit rascher Vorwärtsund langsamer Rückwärtsbewegung, kann in der Flüssigphase auch eine gerichtete kontinuierliche Umwälzbewegung zusätzlich zur pulsierenden oder oszillierenden Bewegung erzeugt werden. Eine Umwälzbewegung kann aber auch durch eine separat einstellbare, zusätzliche Umwälzvorrichtung erzeugt werden. Vorzugsweise kann das Volumen der Flüssigphase 10² bis 10⁴ x grösser sein als das Hubvolumen des Oszillators und so mit einer relativ kleinen Oszillatoreinrichtung einen grossen vorteilhaften Effekt bei der Kristallisation hervorrufen.

Im folgenden wird die Erfindung anhand von Beispielen und Figuren näher erläutert. Es zeigen:
- Fig. 1: den zeitlichen Verlauf der oszillierenden Bewegung des erfindungsgemässen Verfahrens mit verschiedenen möglichen Pulsformen;
- Fig. 2: eine erfindungsgemässe Vorrichtung mit externem Oszillator und zusätzliche Umwälzvorrichtung;
- Fig. 3: eine Variante von Fig. 2;
- Fig. 4: eine Vorrichtung mit internem Oszillator;
- Fig. 5: eine Vorrichtung mit mehreren internen Oszillatoren;
- Fig. 6: eine aufwachsende Kristallphase auf einer Kühlfläche und die Zone der konstitutionellen Unterkühlung;
- Fig. 7, 8: den Einfluss des erfindungsgemässen Verfahrens auf den Kristallisationsprozess.

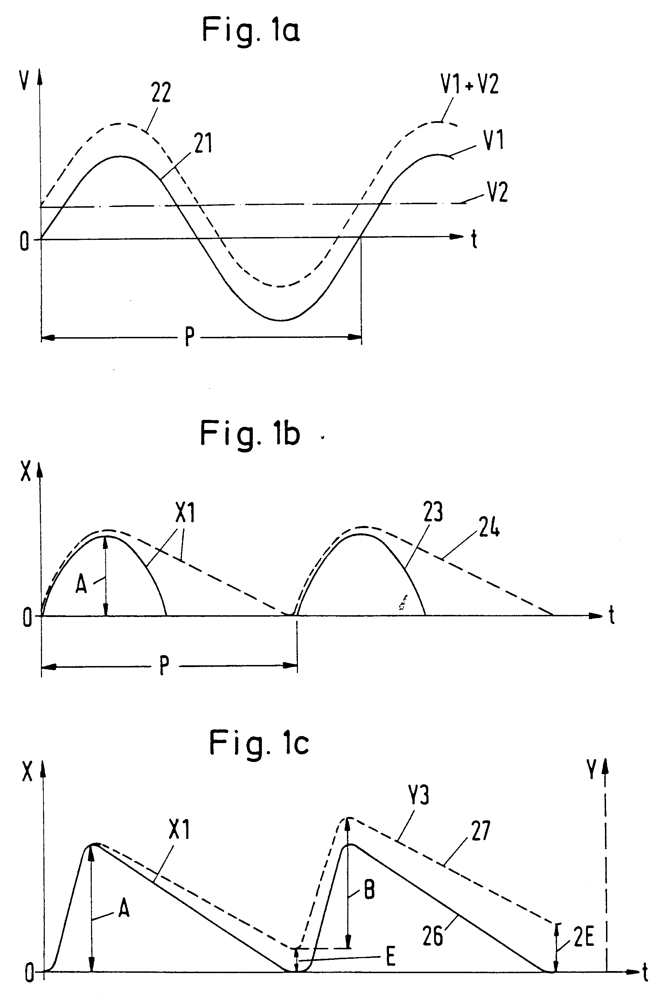

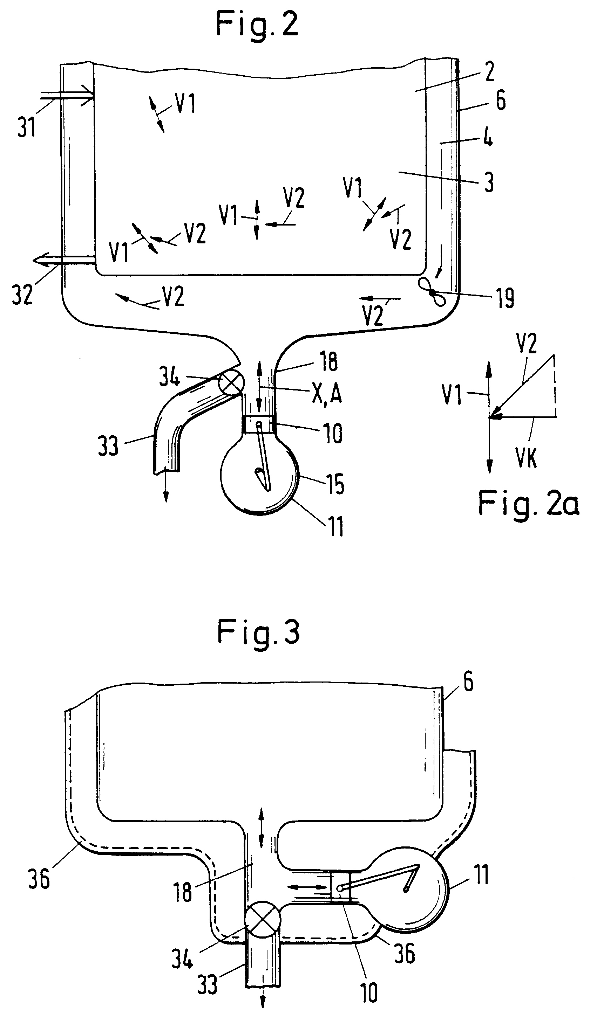

Die Figuren 1a bis c zeigen Beispiele möglicher Pulsformen, d.h. den zeitlichen Verlauf der oszillierenden Bewegung V1, X1 (t) an einem bestimmten Ort in der Flüssigphase. Fig. 1a zeigt einen symmetrischen, sinusförmigen Verlauf 21 der Geschwindigkeit V in Funktion der Zeit t mit einer Periode P. Wird dazu eine konstante Geschwindigkeit V2 einer zusätzlichen gleichförmigen Umwälzbewegung überlagert, so resultiert die Geschwindigkeit V1 plus V2 nach Kurve 22. Wie in Fig. 2 mit den Pfeilen V1 und V2 an verschiedenen Orten in der Flüssigphase 4 gezeigt, sind sowohl die oszillierenden Bewegungen V1 als auch die gleichförmige Umwälzbewegung V2 ortsabhängig, je bezüglich der Bewegungsrichtung als auch bezüglich der Bewegungsgrösse. Wichtig ist nun, dass über einen Grossteil der Kristallisationsflächen sowohl die Grössen als auch die Richtungen der Geschwindigkeiten im vorteilhaften Bereich liegen wie später weiter erläutert wird.

Die Figuren 1b und 1c zeigen Beispiele mit asymmetrischen Pulsen, wobei hier der Auslenkungsweg X1 am Oszillator bzw. die Bewegung Y3 in der Flüssigphase in Funktion der Zeit t dargestellt sind. Fig. 1b zeigt Sinushalbwellen nach Kurve 23 bzw. verzerrte Halbwellen nach Kurve 24. Mit den gerundeten sägezahnartigen Pulsformen von Fig. 1c wird eine rasche Auslenkung in einer Richtung, gefolgt von einer langsamen Rückkehr in die Ausgangslage des Oszillators nach Kurve 26 erzeugt. Durch diese Anregung am Oszillator wird in der Flüssigphase eine Bewegung Y3 (t) erzeugt, welche auch eine Umwälzkomponente enthält. Nach jedem Puls wird dabei die Flüssigphase um ein Stück E weiterbewegt gemäss Kurve 27. Hier ist zu beachten, dass die Amplitude A am Oszillator sehr viel grösser ist als die Amplitude B in der Flüssigphase, bedingt durch die entsprechenden Volumenverhältnisse. Das Volumen der Flüssigphase ist vorzugsweise z.B. 10² bis 10⁴ x grösser als das Hubvolumen des Oszillators.

Fig. 2 zeigt eine erfindungsgemässe Kristallisationsvorrichtung mit einem Kristallisationsbehälter 6, einer Flüssigphase 4 und Kühlflächen 2, auf denen eine Kristallphase 3 aufwächst. Die Kühlflächen 2 weisen eine Zuleitung 31 und eine Ableitung 32 für ein Kühl- bzw. Heizmedium auf. Ein hydraulischer Oszillator 10 mit zugehörendem Antrieb 15, beides hier in Form einer Dosierkolbenpumpe 11, erzeugt die oszillierende bzw. pulsierende Bewegung, welche über eine Verbindungsleitung 18 auf die Flüssigphase 4 im Kristallisationsbehälter 6 übertragen wird. Hier entsteht eine örtliche Verteilung der oszillierenden Bewegung bzw. von deren Geschwindigkeiten V1 entsprechend der räumlichen Anordnung von Oszillator 10, Verbindungsleitung 18 und Kühlflächen 2 im Kristallisationsbehälter 6. Zur oszillierenden Bewegung V1 ist hier eine zusätzliche gleichförmige Bewegung V2 überlagert, welche durch eine Umwälzvorrichtung 19 z.B. in Form eines Magnetrührers erzeugt wird. Die Geometrie und die räumliche Anordnung dieser Komponenten wird mit Vorteil so gewählt, dass die oszillierende Bewegung V1 über einen Grossteil der Kühlflächen im wesentlichen parallel zu diesen verläuft und dass eine allfällige zusätzliche Umwälzbewegung V2 eine Komponente VK senkrecht zur oszillierenden Bewegungsrichtung V1 und auch zu den Kühlflächen aufweist (Fig. 2a).

Fig. 3 zeigt einen thermisch isolierenden, allfällig heizbaren Mantel 36, welcher den unteren Teil des Kristallisationsbehälters 6, die Verbindungsleitung 18 und den Oszillator 10 umfasst, wodurch die darin befindliche Flüssigphase auf konstanter optimaler Temperatur gehalten ist. Ueber einen Auslass 33 und ein Ventil 34 kann nach Beendigung eines Kristallisationszyklus zuerst die Mutterlauge und anschliessend auch das reine Kristallisat abgelassen werden.

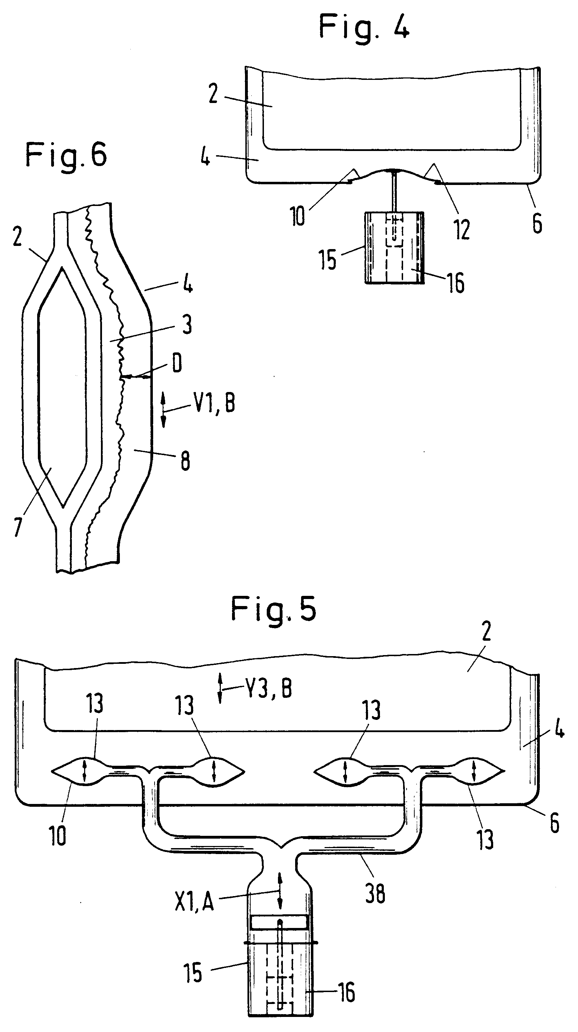

Fig. 4 zeigt eine Variante mit einem internen, im Kristallisationsbehälter 6 befindlichen Oszillator in Form einer Membranpumpe 12, welche von einem Linearmotor 16 angetrieben wird. Mit einem elektrischen Linearmotor können dabei weitgehend beliebige, optimierbare Pulsformen erzeugt werden (z.B. nach Fig. 1c). Im Beispiel von Fig. 5 treibt ein Linearmotor 16 mehrere über den Boden des Kristallisationsgefässes 6 verteilte Oszillatoren 13 an. Dieser Antrieb kann z.B. hydraulisch oder pneumatisch über Leitungen 38 erfolgen.

Fig. 6 zeigt einen orthogonalen Schnitt durch eine Kühlfläche 2 mit Hohlräumen 7, in denen ein Kühlmittel zirkuliert. Auf dieser Kühlfläche 2 wächst eine Kristallphase 3 auf, an welche sich eine Zone konstitutioneller Unterkühlung 8 mit einer Stärke D anschliesst. Durch Oszillation mit einer Amplitude B kann nun die Temperatur- und Konzentrationsverteilung in diesem Bereich so verbessert werden, dass eine stark erhöhte Trennwirkung des Kristallisationsprozesses eintritt. Mit Vorteil liegt dabei die Amplitude B in der gleichen Grössenordnung wie die Grenzschichtdicke D. Die Optimierung der Oszillation kann sowohl rechnerisch abgeschätzt als auch experimentell durch Variation der Amplitude B und der Frequenz erreicht werden. Für viele Stoffgemische liegen vorteilhafte Frequenzwerte der oszillierenden bzw. pulsierenden Bewegung zwischen 50 und 500 Min.⁻¹ und die Amplituden B zwischen 50 und 500 µ.

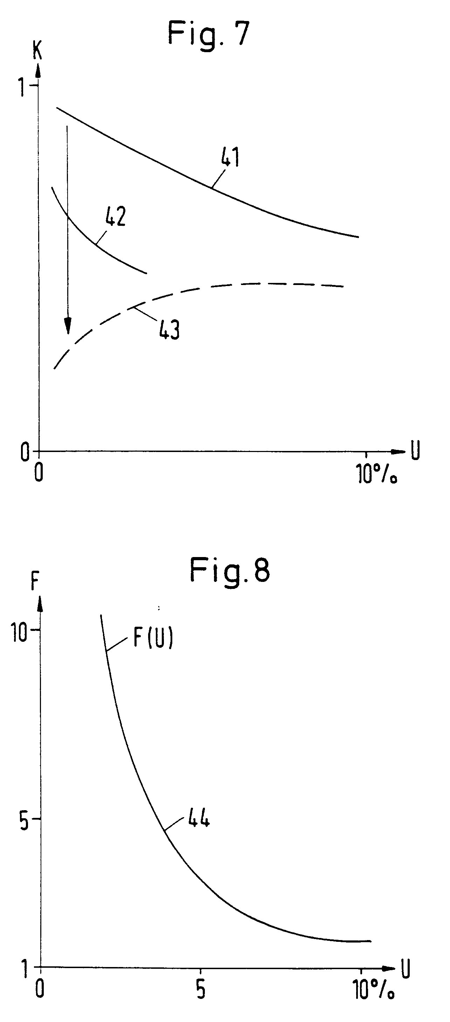

Fig. 7 zeigt ein prinzipielles Beispiel der Verbesserung der Trennwirkung durch das erfindungsgemässe Verfahren im Verlauf des Verteilungskoeffizienten K, definiert als Verhältnis des Verunreinigungsgehalts im Kristallisat zu dem der Flüssigphase bzw. der Restschmelze, in Funktion der Ausgangsverunreinigung U. Ohne Oszillation bzw. Pulsation ist der Verteilungskoeffizient K hoch, (d.h. die Trennwirkung schlecht), und meist mit abnehmender Ausgangsverunreinigung zunehmend nach Kurve 41, z.B. bei einer Kristallisationszeit von einer Stunde. Durch starke Erhöhung der Kristallisationszeit auf z.B. 4 Std. kann eine mässige Verbesserung der Trennwirkung nach Kurve 42 erreicht werden. Durch das erfindungsgemässe Verfahren jedoch kann in der gleichen kürzeren Kristallisierzeit von einer Stunde eine wesentlich stärkere Verbesserung gemäss Kurve 43 erreicht werden. Ueberraschend und auch besonders erwünscht ist hier der Effekt, dass die Trennwirkung bei den schwer zu reinigenden kleinen Verunreinigungen U noch zunehmend besser wird, d.h. ein sehr kleiner Verteilungskoeffizient K erreicht werden kann. Die Trennwirkung durch optimiertes Oszillieren wird also nicht nur wesentlich erhöht, beschleunigt und damit wirtschaftlicher sondern es können in vielen Fällen auch wesentlich reinere Substanzen erreicht werden als mit den bisherigen Verfahren. Dieser Effekt nach Fig. 7 gilt z.B. für ein zu trennendes Stoffgemisch aus Caprolactam/Cyclohexanon.

Fig. 8 zeigt den Verbesserungsfaktor F in Funktion der Ausgangsverunreinigung U. F ist definiert als Verhältnis der Verunreinigungen im Kristallisat bei nicht oszilliertem Betrieb zu der bei oszilliertem Betrieb. Auch dieser Verbesserungsfaktor F nimmt mit sinkender Verunreinigung U zu gemäss Kurve 44. Als Beispiel kann beim Stoffgemisch Para/Ortho-Dichlorbenzol bei einer Ausgangsverunreinigung von noch einem Prozent ein Verbesserungsfaktor F von 10 erreicht werden. D.h. es ist hier durch erfindungsgemässe Verfahren und Vorrichtungen eine zehnfach reinere Substanz produzierbar.

### Bezeichnungsliste

- 2: Kühlflächen
- 3: Kristallphase
- 4: Flüssigphase
- 6: Kristallisationsbehälter
- 7: Hohlräume in 2
- 8: Zone konstitutioneller Unterkühlung
- 10: hydraulischer Oszillator
- 11: Kolbenpumpe
- 12, 13: Membranoszillatoren, -pumpen
- 15: Antrieb von 10
- 16: Linearantrieb
- 18: Verbindungsstück, Leitung
- 19: Umwälzvorrichtung Kurven in Funktion der Zeit
- 21: V1 (t), Pulsformen
- 22: V1 + V2 (t), Pulsformen
- 23: X1 (t), Pulsformen
- 24: X1 (t), Pulsformen
- 26: X1 (t), Pulsformen
- 27: Y3 (t), Pulsformen
- 31: Zuleitung
- 32: Ableitung von 2
- 33: Ablauf
- 34: Ventil
- 36: thermisch isolierender Mantel
- 38: Hydraulik-, Pneumatikleitungen
- 41: K(U) 1h
- 42 K(U): 4h
- 43 K(U): oszilliert
- 44: F(U)
- A: Amplitude von X1 am Oszillator
- B: Amplitude von Y3 in 4
- D: Stärke der Zone konstitutioneller Unterkühlung 8
- E: Umwälzkomponente
- V, V1, V2, VK (t): Geschwindigkeit in 4
- X, X1: Verschiebung an Oszillator
- Y, Y3: Verschiebung in 4
- t: Zeit
- P: Periode
- U: Ausgangsverunreinigung
- F: Verbesserungsfaktor
- K: Verteilungskoeffizient

## Patentansprüche

1. Verfahren zur Stofftrennung mittels gerichteter fraktionierter Kristallisation mit einer auf Kühlflächen (2) aufwachsenden, eine zusammenhängende Schicht bildenden Kristallphase (3) und einer diese umgebende Flüssigphase (4), dadurch gekennzeichnet, dass die Flüssigphase (4) während des Kristallisationsvorgangs in oszillierende Bewegung versetzt wird.

2. Verfahren nach Anspruch 1, dadurch gekennzeichnet, dass der oszillierenden Bewegung (V1) der Flüssigphase (4) zusätzlich eine gleichförmige Umwälzbewegung (V2) überlagert wird.

3. Verfahren nach Anspruch 2, dadurch gekennzeichnet, dass die Umwälzbewegungsrichtung mindestens im Bereich der Phasengrenze eine Komponente (VK) aufweist, die senkrecht zur Oszillationsrichtung (V1) verläuft.

4. Verfahren nach Anspruch 1, dadurch gekennzeichnet, dass die Amplituden (B) der oszillierenden Bewegung in der gleichen Grössenordnung liegen wie die Grenzschichtdicke (D) der konstitutionellen Unterkühlungszone.

5. Verfahren nach Anspruch 2, dadurch gekennzeichnet, dass im Mittel ihrer Beträge die Geschwindigkeiten der oszillierenden Bewegung (V1) und die der gleichförmigen Bewegung (V2) in der gleichen Grössenordnung liegen.

6. Verfahren nach Anspruch 1, dadurch gekennzeichnet, dass die Amplituden (B) der oszillierenden Bewegung im Mittel zwischen 50 und 500 µ liegen.

7. Verfahren nach Anspruch 1, dadurch gekennzeichnet, dass die Frequenz (F) der oszillierenden Bewegung zwischen 50 und 400 Min.⁻¹ liegt.

## Claims

1. A method of separating materials by directional fractionated crystallization, comprising a crystal phase (3) growing on cooling surfaces (2), forming a cohesive layer, and surrounded by a liquid phase (4), characterised in that the liquid phase (4) is made to oscillate during the crystallization process.

2. A method according to claim 1, characterised in that the oscillating motion (V1) of the liquid phase (4) is additionally overlaid by a uniform rotational motion (V2).

3. A method according to claim 2, characterised in that the direction of rotational motion, at least near the phase interface, has a component (VK) extending at right angles to the direction of oscillation (V1).

4. A method according to claim 1, characterised in that the amplitudes (B) of the oscillating motion are of the same order as the thickness (D) of the boundary layer of the constitutional supercooling zone.

5. A method according to claim 2, characterised in that the average speeds of the oscillating motion (V1) and the uniform motion (V2) are of the same order.

6. A method according to claim 1, characterised in that the amplitudes (B) of the oscillating motion are on average between 50̸ and 50̸0̸ µ.

7. A method according to claim 1, characterised in that the frequency (F) of the oscillating motion is between 50̸ and 40̸0̸ min⁻¹.

## Revendications

1. Procédé de séparation de substances par cristallisation fractionnée dirigée, avec une phase cristalline (3) formant une couche cohérente, croissant sur des surfaces de refroidissement (2), et une phase liquide (4) entourant la phase (3), caractérisé en ce qu'un mouvement oscillant est imprimé à la phase liquide (4) pendant le processus de cristallisation.

2. Procédé suivant la revendication 1, caractérisé en ce qu'un mouvement uniforme de circulation (V2) est en outre superposé au mouvement oscillant (V1) de la phase liquide (4).

3. Procédé suivant la revendication 2, caractérisé en ce que la direction du mouvement de circulation présente au moins dans la région de la limite des phases une composante (VK) qui est perpendiculaire à la direction d'oscillation (V1).

4. Procédé suivant la revendication 1, caractérisé en ce que les amplitudes (B) du mouvement oscillant sont du même ordre de grandeur que l'épaisseur (D) de la couche limite de la zone de surfusion de constitution.

5. Procédé suivant la revendication 2, caractérisé en ce que les vitesses du mouvement oscillant (V1) et les vitesses du mouvement uniforme (V2) sont du même ordre de grandeur dans la moyenne de leurs valeurs.

6. Procédé suivant la revendication 1, caractérisé en ce que les amplitudes (B) du mouvement oscillant se situent en moyenne entre 50 et 500 µm.

7. Procédé suivant la revendication 1, caractérisé en ce que la fréquence (F) du mouvement oscillant se situe entre 50 et 400 min⁻¹.
